# EUROPÄISCHE PATENTSCHRIFT

(11) **EP 3 413 460 B1**
(45) Veröffentlichungstag und Bekanntmachung des Hinweises auf die Patenterteilung: **21.07.2021**
(21) Anmeldenummer: 18175033.2
(22) Anmeldetag: 30.05.2018
(51) Int. Cl.: H02P 9/48, H02P 9/26, E01C 19/48

(54) **BAUMASCHINE, INSBESONDERE STRASSENBAUMASCHINE, WIE STRASSENFERTIGER**
CONSTRUCTION MACHINE, IN PARTICULAR ROAD MAKING MACHINE OR PAVER
ENGIN DE CONSTRUCTION, EN PARTICULIER ENGIN DE CONSTRUCTION DE ROUTES, TELLE QUE FINISSEUSE

(30) Priorität: 09.06.2017 DE 102017209805
(43) Veröffentlichungstag der Anmeldung: 12.12.2018
(73) Patentinhaber: KW-Generator GmbH & Co. KG, 73527 Schwäbisch Gmünd (DE)
(72) Erfinder: Kurz, Michael, 73565 Spraitbach (DE); Werner, Michael, 73572 Heuchlingen (DE)
(74) Vertreter: advotec.

(56) Entgegenhaltungen:
- EP-B1- 2 956 584
- US-A1- 2008 001 580

## Beschreibung

Die Erfindung betrifft eine Baumaschine, insbesondere eine Straßenbaumaschinen, wie beispielsweise einen Straßenfertiger, mit den im Oberbegriff des Anspruchs 1 angegebenen Merkmalen.

Derartige Baumaschinen sind aus dem Stand der Technik beispielsweise aus der EP 2 372 022 B1 bekannt. Diese Druckschrift offenbart einen Straßenfertiger mit einem Antriebsmotor in Form eines Verbrennungsmotors als Primärantriebsaggregat, das einen Drehstromgenerator antreibt. Letzterer dient beispielsweise zur Versorgung eines elektrischen Verbrauchers auf dem Straßenfertiger, wie der Heizeinrichtung der Heizbohle des Straßenfertigers, die zur Egalisierung des vom Straßenfertiger ausgebrachten Straßenbelagsmaterials dient.

Die vorgenannte Druckschrift beschäftigt sich in erster Linie mit der von der Drehzahl des Antriebsmotors unabhängigen Erzeugung einer Standard-Netzspannung, die auf der Baumaschinen für den Betrieb von elektrischen Geräten, wie einer Handbohrmaschine, einem Hochdruckreiniger, einem Schrauber oder einer Handlampe, bereitgestellt werden soll. Hierzu wird eine Drehzahl-stabilisierte Spannungsversorgungseinheit vorgeschlagen.

Die EP 2 956 584 B1 betrifft ein Verfahren zum Beheizen einer mit einer elektrischen Heizeinrichtung ausgestatteten Einbaubohle eines Straßenfertigers sowie einen Straßenfertiger. Ferner betrifft die US 2008/001580 A1 Permanentmagnetgeneratoren sowie ein System und ein Verfahren zum Regulieren der Leistung eines Permanentmagnetgenerators.

Die der vorliegenden Erfindung zugrunde liegende Problematik betrifft allerdings nicht die Bereitstellung einer festfrequenten Standard-Netzspannung, sondern die Energieversorgung des nicht auf eine festfrequente Versorgungsspannung angewiesenen Verbrauchers, wie beispielsweise der Bohlenheizung des Straßenfertigers. Dazu werden bekanntermaßen geregelte Synchrongeneratoren verwendet, die im Drehzahlband des Antriebsmotors von beispielsweise 700 - 2200 U/min über Keilriemen oder eine Kardanwelle direkt angetrieben werden. Der Generator regelt bei variabler Frequenz die Ausgangsspannung dabei auf einen konstanten Wert.

Diese technische Lösung ist für Anwendungsfälle, bei denen es auf eine festfrequente Spannungsversorgung nicht ankommt, an sich schaltungstechnisch zu aufwendig und im Hinblick auf den Raumbedarf von Synchrongeneratoren für den Einsatz auf Fahrzeugen nachteilig.

Der Erfindung liegt die Aufgabe zugrunde, eine für die nicht festfrequente Spannungsversorgung von elektrischen Verbrauchern in einer Baumaschine praxisgerechte, kompakte Generatoranordnung zu schaffen.

Diese Aufgabe wird durch die im Kennzeichnungsteil des Anspruchs 1 angegebenen Merkmale gelöst, wobei
- ein Antriebsmotor mit mindestens zwei Betriebszuständen mit festen Betriebsdrehzahlen betrieben ist,
- die jeweiligen Unterwicklungen der Drehspannungswicklungen unterschiedliche Windungszahlen aufweisen, und
- eine Ansteuerung der Schalter in Abhängigkeit des an einer einzelnen Umwicklung über deren Frequenz erfassten Betriebszustandes des Antriebsmotors derart erfolgt, dass durch Ein- und/oder Ausschalten von einzelnen oder Gruppen der jeweiligen Unterwicklungen der Drehspannungswicklungen an den Phasenleitern des Permanentmagnet-Generators eine Ausgangsspannung im Betriebsspannungsbereich des elektrischen Verbrauchers anliegt.

Der Vorteil eines Permanentmagnet-Generators mit Umschalttechnik, wie sie durch die vorstehend umrissene Ansteuerung der Schalter durch Ein- und/oder Ausschalten von einzelnen oder Gruppen der jeweiligen Unterwicklungen realisiert ist, liegt in seiner Kompaktheit und damit die Möglichkeit, einen solchen Generator wesentlich einfacher beispielsweise im Motorraum einer Baumaschine zu integrieren. In Verbindung mit heute üblichen Antriebsmotoren ist es möglich, dass bei bestimmten Arbeitspunkten des Motors, wie beispielsweise Standgas und einer Arbeitsdrehzahl, durch eine entsprechende Beschaltung der Unterwicklungen des Permanentmagnet-Generators dann für beide Arbeitspunkte eine Ausgangsspannung erzeugt wird, die innerhalb eines im wesentlichen konstanten Betriebsspannungsbereiches liegt.

In den abhängigen Ansprüchen sind bevorzugte Weiterbildungen des Erfindungsgegenstandes angegeben. So sind vorteilhafter Weise die Anschlüsse der Unterwicklungen aus dem Stator des Permanentmagnet-Generators herausgeführt, um außen am Generator in gut zugänglicher Weise die Schalter zu positionieren.

Eine schaltungstechnische Vereinfachung kann dadurch erreicht werden, dass die Drehspannungswicklungen sternförmig verschaltet sind und die jeweils erste Unterwicklung der einzelnen Phasen direkt mit dem Sternpunkt verbunden ist.

In bevorzugter Weiterbildung der Erfindung kann die Erfassungseinrichtung zur Erfassung des jeweiligen Betriebszustandes des Antriebsmotors nur die an einer einzelnen Unterwicklung erzeugte Wechselspannung oder deren Frequenz erfassen. Da diese Erfassungsgröße repräsentativ für alle Phasen ist, genügt der Zugriff auf eine Phase, was für eine weitere Vereinfachung der Generatoranordnung sorgt.

Mit derselben Zielrichtung können die Drehspannungswicklungen mit ihren Unterwicklungen und deren Beschaltung mit den Schaltern bezüglich der einzelnen Phasen zueinander identisch aufgebaut sein.

Als Schalter kommen bevorzugt Halbleiterschalter oder mechanische Schalter/Schütze zum Einsatz.

Schließlich können die Drehspannungswicklungen durch jeweils drei seriell geschaltete Unterwicklungen realisiert werden, was im Hinblick auf die Zahl von Unterwicklungen einen guten Kompromiss zwischen möglichst geringem Schaltungsaufwand und Abdeckung unterschiedlicher Betriebszustände bzw. Betriebsdrehzahlen des Antriebsmotors herstellt. So können mit dieser Beschaltung beispielsweise vier breit über das Drehzahlband des Motors verteilte Arbeitspunkte abgedeckt werden. Zur Vermeidung unnötiger Wiederholungen wird hierzu auf die folgende Beschreibung des Ausführungsbeispiels verwiesen.

Zur besseren Anpassung der Schaltungsmöglichkeiten an die abzudeckenden Betriebsdrehzahlen weisen die Unterwicklungen einer Drehspannungswicklung unterschiedliche Windungszahlen auf, die sich beispielsweise zueinander wie ganzzahlige Vielfache verhalten.

Aus der oben bereits erwähnten Beschreibung des Ausführungsbeispiels werden weitere Merkmale, Einzelheiten und Vorteile der Erfindung deutlich. In den der Beschreibung beigefügten Zeichnungen zeigen
- Fig. 1: eine schematische Ansicht eines Straßenfertigers,
- Fig. 2: ein Blockschaltbild des Antriebsmotors und der Generatoranordnung des Straßenfertigers nach Fig. 1, und
- Fig. 3: ein Schaltbild des Drehspannungswicklungspakets des Permanentmagnet-Generators der Generatoranordnung gemäß Fig. 2.

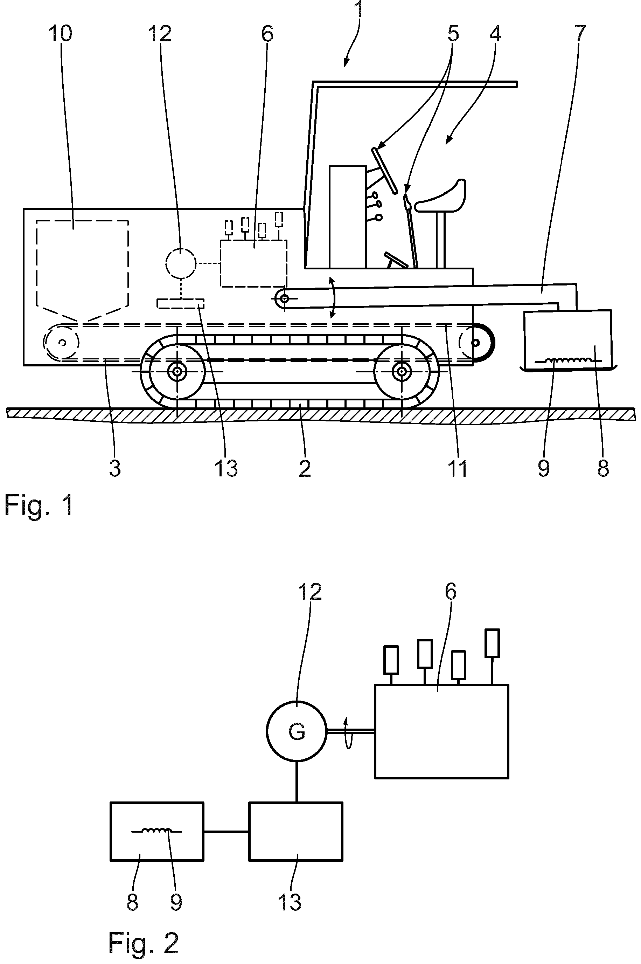

Wie aus Fig. 1 deutlich wird, weist ein Straßenfertiger 1 ein übliches Raupenfahrwerk 2 auf. Am blockartig angedeuteten Maschinengestell 3 dieser Baumaschine ist eine Führerstand 4 mit den üblichen Betätigungselementen 5 angeordnet. Ferner weist die Maschine einen Antriebsmotor 6 - in der Regel ein Dieselmotor - zum Antrieb aller beweglichen Elemente des Straßenfertigers 1 auf. Dazu gehören das erwähnte Raupenfahrwerk 2 sowie weitere, nicht explizit dargestellte Hydraulikantriebe beispielsweise für die Höhen-Verstellung des Auslegerarms 7, an dem eine sogenannte Heizbohle 8 mit einer elektrisch betriebenen Heizwendel 9 angeordnet ist. Diese Heizbohle 8 dient zur Egalisierung des (nicht näher dargestellten) Straßenbelagmaterials beispielsweise in Form von Asphalt, der aus einem Vorratsbunker 10 im Straßenfertiger 1 über eine förderbandartige Austragseinrichtung 11 auf den Straßenunterbau aufgetragen wird. Auch die Austragseinrichtung 11 wird mittelbar vom Antriebsmotor 6 über übliche, nicht näher dargestellte Hydraulikmotoren angetrieben. Solche Antriebe können auch für übliche weitere Funktionsaggregate des Straßenfertigers 1 verwenden finden, wie beispielsweise Presselemente, Rüttelplatten und Verstellelemente zur Anpassung des Straßenfertigers 1 an unterschiedliche Ausbringbreiten des Straßenbelagmaterials.

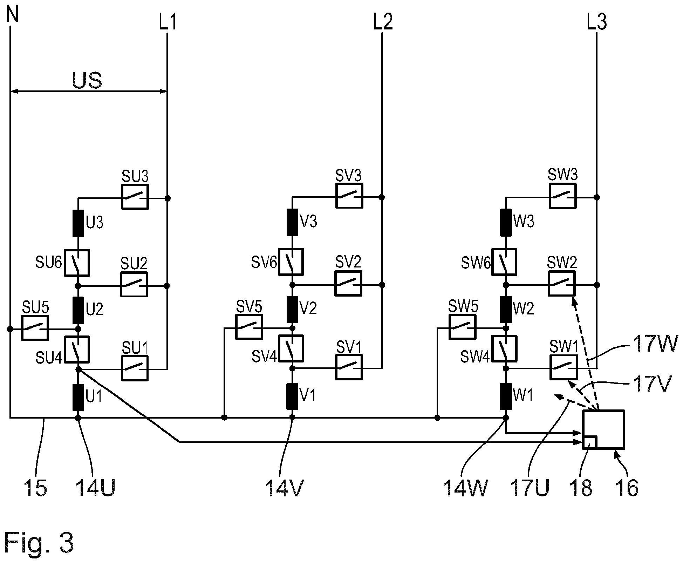

Wie aus Fig. 1 und 2 ferner deutlich wird, ist zur Energieversorgung insbesondere der Heizwendel 9 in der Heizbohle 8 an den Antriebsmotor 6 ein direkt davon angetriebener Permanentmagnet-Generator 12 angekoppelt, der damit synchron mit der Drehzahl des Antriebsmotors 6 läuft. Ferner ist dieser Generator 12 mit einer als Ganzes mit 13 bezeichneten Umschalttechnik verbunden, die in Fig. 3 detailliert dargestellt ist und anhand dieser Zeichnung im Folgenden näher erläutert wird.

So zeigt Fig. 3 den Neutralleiter N sowie die drei Phasenleiter L1, L2, L3 des Generators 12. Dessen Drehspannungswicklungspaket weist drei jeweils einer Phase zugeordneten Drehspannungswicklungen U, V, W auf, die wiederum jeweils in drei Unterwicklungen U1, U2, U3; V1, V2, V3; W1, W2, W3 unterteilt sind. Die Eingangsanschlüsse 14U, 14V, 14W der jeweils ersten Unterwicklung U1, V1, W1 sind jeweils mit dem Sternpunkt 15 der sternförmig verschalteten Drehspannungswicklungen U, V, W verbunden. Ferner sind alle weiteren Anschlüsse (aus Übersichtlichkeitsgründen ohne Bezugszeichen) der Unterwicklungen U1, U2, U3; V1, V2, V3; W1, W2, W3 aus dem eigentlichen Permanentmagnet-Generator 12 herausgeführt und über getrennt ansteuerbare Schalter SU1 - SU6; SV1 - SV6; SW1 - SW6 durch Ein-, Aus- und/oder Zusammenschalten von einzelnen oder Gruppen der jeweiligen Unterwicklungen U1, U2, U3; V1, V2, V3; W1, W2, W3 selektiv mit dem Neutralleiter N bzw. den Phasenleitern L1, L2, L3 zu verbinden.

Die Ansteuerung dieser Umschalttechnik 13 erfolgt durch eine Steuereinrichtung 16, die über gestrichelt summarisch angedeutete Steuerleitungen 17U, 17V, 17W auf die beispielsweise als Halbleiterrelais ausgelegten Schalter SU1 - SU6; SV1 - SV6; SW1 - SW6 zugreifen. Zur Erfassung des Betriebszustandes des Antriebsmotors 6 und insbesondere dessen Drehzahl ist eine Erfassungseinrichtung 18 beispielsweise in Form eines Messsensors vorgesehen, mit dessen Hilfe das an der Unterwicklung U1 bei laufendem Antriebsmotor 6 erzeugte Spannungssignal in seiner für die Drehzahl des Motors repräsentativen Frequenz ermittelt wird.

Im Folgenden wird anhand der Fig. 3 der Aufbau der Unterwicklungen U, V, W und deren Beschaltung am Beispiel der Unterwicklung U näher erläutert. Diese Erläuterung ist entsprechend auf die beiden anderen Unterwicklungen V, W übertragbar.

So sind die seriell hintereinandergeschalteten Unterwicklungen U1, U2, U3 mit unterschiedlichen Windungszahlen versehen, beispielsweise die Unterwicklung U1 mit 10 Windungen und die Unterwicklungen U2, U3 mit jeweils 5 Windungen. Die Unterwicklungen U1, U2, U3 sind ferner jeweils ausgangsseitig über Schalter SU1, SU2, SU3 mit dem Phasenleiter L1 verbunden. Nach den jeweiligen Abzweigpunkten der Schalter SU1, SU2 sind zwischen den Unterwicklungen U1 und U2 bzw. U2 und U3 Schalter SU4 und SU6 eingesetzt. Ein letzter Schalter SU5 verbindet den Neutralleiter N mit dem Eingang der mittleren Unterwicklung U2.

Mithilfe des gezeigten Netzwerkes an Unterwicklungen U1, U2; U3 und Schaltern SU1 - SU6 können beispielsweise vier Betriebszustände mit jeweils unterschiedlichen Drehzahlen des Antriebsmotors 6 abgedeckt und dabei eine konstante Ausgangsspannung von 230 V zwischen Neutralleiter N und Phasenleiter L1 generiert werden. Dazu sind die Schalter in Abhängigkeit der Antriebsstufe mit einer jeweiligen festen Beispieldrehzahl gemäß der folgenden Tabelle anzusteuern. Die in der Spalte "Angesteuerte Schalter" genannten Schalter sind dabei geschlossen, die anderen, nicht genannten Schalter geöffnet.

| Antriebsstufe | Drehzahl N | Ausgangsspannung US | Strom durch L1 | Angesteuerte Schalter | Aktive Windungen |
|---|---|---|---|---|---|
| 1 | 1500 | 230 V | 100 % | SU3/SU6/SU4 | 20 |
| 2 | 2250 | 230 V | 100 % | SU4/SU2 | 15 |
| 3 | 3000 | 230 V | 200 % | SU1/SU3/SU6/SU5 | 10 |
| 4 | 6000 | 230 V | 100 % | SU5/SU2 | 5 |

Wie aus der Tabelle deutlich wird, kann der Antriebsmotor 6 in Leerlauf-Drehzahl - Antriebsstufe 1- oder in zwei beispielsweise als Öko-Drehzahlen zu bezeichnenden mittleren Drehzahlen - Antriebsstufen 2 und 3 - oder mit Maximal-Drehzahl - Antriebsstufe 4 - laufen. Dabei kann die Spannungsversorgungseinrichtung mit dem Permanentmagnet-Generator 12 und der Umschalttechnik 13 konstant eine Ausgangsspannung von 230 V liefern.

## Patentansprüche

1. Baumaschine, insbesondere Straßenbaumaschine, wie Straßenfertiger, umfassend
- einen Antriebsmotor (6) in Form eines Verbrennungsmotors,
- einen elektrischen Verbraucher, insbesondere eine Heizwendel (9) einer Heizbohle (8) eines Straßenfertigers (1) zur Egalisierung des vom Straßenfertiger (1) ausgebrachten Straßenbelagsmaterials, welcher Verbraucher (9) mit einem im wesentlichen konstanten Betriebsspannungsbereich (US) zu betreiben ist,
- einen mit dem Antriebsmotor (6) gekoppelten, davon angetriebenen Permanentmagnet-Generator (12) mit einem Drehspannungswicklungspaket, dessen jeweils einer Phase zugeordneten Drehspannungswicklungen (U, V, W) jeweils in Unterwicklungen (U1, U2, U3; VI, V2, V3; W1, W2, W3) unterteilt sind, die untereinander und/oder zu ihrem Phasenanschluss (LI, L2, L3) hin über getrennt ansteuerbare Schalter (SU1 - SU6; SV1 - SV6; SW1 - SW6) verbunden sind,
- eine Steuereinrichtung (16) zur Ansteuerung der Schalter (SU1 - SU6; SV1
- SV6; SW1 - SW6), und
- eine mit der Steuereinrichtung (16) verbundene Erfassungseinrichtung (18) zur Erfassung des jeweiligen Betriebszustandes des Antriebsmotors (6),
**dadurch gekennzeichnet, dass**
- der Antriebsmotor (6) mit mindestens zwei Betriebszuständen mit festen Betriebsdrehzahlen betrieben ist,
- die jeweiligen Unterwicklungen (U1, U2, U3; VI, V2, V3; W1, W2, W3) der Drehspannungswicklungen (U, V, W) unterschiedliche Windungszahlen aufweisen, und
- eine Ansteuerung der Schalter (SU1 - SU6; SV1 - SV6; SW1 - SW6) in Abhängigkeit des an einer einzelnen Unterwicklung (U1, U2, U3; VI, V2, V3; W1, W2, W3) über deren Frequenz erfassten Betriebszustandes des Antriebsmotors (6) derart erfolgt, dass durch Ein- und/oder Ausschalten von einzelnen oder Gruppen der jeweiligen Unterwicklungen (U1, U2, U3; VI, V2, V3; W1, W2, W3) der Drehspannungswicklungen (U, V, W) an den Phasenleitern (LI, L2, L3) des Permanentmagnet-Generators (12) eine Ausgangsspannung (US) im Betriebsspannungsbereich des elektrischen Verbrauchers (9) anliegt.

2. Baumaschine nach Anspruch 1, **dadurch gekennzeichnet, dass** die Anschlüsse der Unterwicklungen (U1, U2, U3; VI, V2, V3; W1, W2, W3) aus dem Stator des Permanentmagnet-Generators (12) zu den Schaltern (SU1 - SU6; SV1 - SV6; SW1 - SW6) herausgeführt sind.

3. Baumaschine nach Anspruch 1 oder 2, **dadurch gekennzeichnet, dass** die Drehspannungswicklungen (U, V, W) sternförmig verschaltet sind und deren jeweils erste Unterwicklung (U1; VI; W1) direkt mit dem Sternpunkt (15) verbunden ist.

4. Baumaschine nach einem der vorgenannten Ansprüche, **dadurch gekennzeichnet, dass** die Drehspannungswicklungen (U, V, W) mit ihren Unterwicklungen (U1, U2, U3; VI, V2, V3; W1, W2, W3) und deren Beschaltung mit den Schaltern (SU1 - SU6; SV1 - SV6; SW1 - SW6) bezüglich der einzelnen Phasen zueinander identisch aufgebaut sind.

5. Baumaschine nach einem der vorgenannten Ansprüche, **dadurch gekennzeichnet, dass** die Schalter (SU1 - SU6; SV1 - SV6; SW1 - SW6) als Halbleiterrelais oder mechanische Schalter/Schütze ausgebildet sind.

6. Baumaschine nach einem der vorgenannten Ansprüche, **dadurch gekennzeichnet, dass** die Drehspannungswicklungen (U, V, W) durch jeweils drei seriell geschaltet Unterwicklungen (U1, U2, U3; VI, V2, V3; W1, W2, W3) gebildet sind, wobei jeweils Schalter (SU1 - SU6; SV1 - SV6; SW1 - SW6) zwischen den Unterwicklungen (U1, U2, U3; VI, V2, V3; W1, W2, W3) und zwischen deren Ausgangsseite und den Phasenleitern (LI, L2, L3) des Permanentmagnet-Generators (12) vorgesehen sind.

## Claims

1. A construction machine, in particular a road construction machine, such as a paver, comprising
- a drive motor (6) in the form of a combustion engine,
- an electric load, in particular a heating coil (9) of a heating screed (8) of a paver (1) for leveling the pavement material discharged by the paver (1), the load (9) to be operated in an essentially constant operating voltage range (US),
- a permanent-magnet generator (12) which is coupled to and driven by the drive motor (6) and which has a three-phase voltage coil package whose three-phase voltage coils (U, V, W), which are each assigned to one phase, are each divided into subcoils (U1, U2, U3; V1, V2, V3; W1, W2, W3) connected to each other and/or to their phase terminal (L1, L2, L3) via separately controllable switches (SU1-SU6; SV1-SV6; SW1-SW6),
- a controller (16) for actuating the switches (SU1-SU6; SV1-SV6; SW1-SW6), and
- a detector (18) for detecting a given operating mode of the drive motor (6), the detector (18) being connected to the controller (16),
**characterized in that**
- the drive motor (6) is operated in at least two operating modes having fixed operating speeds,
- the respective subcoils (U1, U2, U3; V1, V2, V3; W1, W2, W3) of the three-phase voltage coils (U, V, W) have different numbers of turns, and
- the switches (SU1-SU6; SV1-SV6; SW1-SW6) are actuated as a function of the operating mode of the drive motor (6), which is detected at an individual subcoil (U1, U2, U3; V1, V2, V3; W1, W2, W3) via the frequency thereof, in such a manner that when individual subcoils (U1, U2, U3; V1, V2, V3; W1, W2, W3) of the three-phase voltage coils (U, V, W) or groups thereof are switched on and/or off, an output voltage (US) in the operating voltage range of the electric load (9) is supplied to the phase conductors (L1, L2, L3) of the permanent-magnet generator (12).

2. The building machine according to claim 1, **characterized in that** the terminals of the subcoils (U1, U2, U3; V1, V2, V3; W1, W2, W3) lead out of the stator of the permanent-magnet generator (12) and to the switches (SU1-SU6; SV1-SV6; SW1-SW6).

3. The building machine according to claim 1 or 2, **characterized in that** the three-phase voltage coils (U, V, W) are connected in a Y-shape and their respective first subcoils (U1, V1, W1) are connected directly to the neutral point.

4. The building machine according to any one of the preceding claims, **characterized in that** the three-phase voltage coils (U, V, W) with their subcoils (U1, U2, U3; V1, V2, V3; W1, W2, W3) and the connection of the subcoils (U1, U2, U3; V1, V2, V3; W1, W2, W3) to the switches (SU1-SU6; SV1-SV6; SW1-SW6) are configured identically in terms of the individual phases.

5. The building machine according to any one of the preceding claims, **characterized in that** the switches (SU1-SU6; SV1-SV6; SW1-SW6) are realized as semiconductor relays or mechanical switches/contactors.

6. The building machine according to any one of the preceding claims, **characterized in that** the three-phase voltage coils (U, V, W) are each formed by three subcoils (U1, U2, U3; V1, V2, V3; W1, W2, W3) connected in series, switches (SU1-SU6; SV1-SV6; SW1-SW6) being provided between the subcoils (U1, U2, U3; V1, V2, V3; W1, W2, W3) and between their output side and the phase conductors (L1, L2, L3) of the permanent-magnet generator (12).

## Revendications

1. Machine de construction, notamment une machine de construction de routes, telle qu'un finisseur, comprenant
- un moteur d'entraînement (6) en forme de moteur à combustion,
- un consommateur électrique, notamment un filament chauffant (9) d'une table de pose chauffante (8) d'un finisseur (1) destiné à égaliser le matériau d'enrobé épandu par le finisseur (1), le consommateur (9) à fonctionner dans une plage de tension de service (US) essentiellement constante,
- un générateur à aimant permanent (12) qui est accouplé à et entraîné par le moteur d'entraînement (6) et qui a un paquet d'enroulements de tension triphasée dont les enroulements de tension triphasée (U, V, W), qui sont associés chacun à une phase, sont divisés en sous-enroulements (U1, U2, U3; V1, V2, V3; W1, W2, W3) connectés entre eux et/ou à leur borne de phase (L1, L2, L3) par des commutateurs (SU1-SU6; SV1-SV6; SW1-SW6) configurés pour être commandés séparément,
- un dispositif de commande (16) destiné à actionner les commutateurs (SU1-SU6; SV1-SV6; SW1-SW6), et
- un détecteur (18) destiné à détecter un mode de fonctionnement respectif du moteur d'entraînement (6), le détecteur (18) étant connecté au dispositif de commande (16),
**caractérisée en ce que**
- le moteur d'entraînement (6) fonctionne en au moins deux modes de fonctionnement ayant des vitesses de fonctionnement fixes,
- les sous-enroulements (U1, U2, U3; V1, V2, V3; W1, W2, W3) respectifs des enroulements de tension triphasée (U, V, W) ont des nombres de tours différents and
- les commutateurs (SU1-SU6; SV1-SV6; SW1-SW6) sont actionnés en fonction du mode de fonctionnement du moteur d'entraînement (6), qui est détecté sur un sous-enroulement (U1, U2, U3; V1, V2, V3; W1, W2, W3) individuel par la fréquence de celui-ci, de telle manière que quand des sous-enroulements (U1, U2, U3; V1, V2, V3; W1, W2, W3) individuels des enroulements de tension triphasée (U, V, W) ou des groupes de ceux-ci sont mis en marche et/ou arrêtés, les conducteurs de phase (L1, L2, L3) du générateur à aimant permanent (12) sont alimentés en tension de sortie (US) dans la plage de tension de service du consommateur électrique (9)

2. Machine de construction selon la revendication 1, **caractérisée en ce que** les bornes des sous-enroulements (U1, U2, U3; V1, V2, V3; W1, W2, W3) sortent du stator du générateur à aimant permanent (12) et s'étendent jusqu'aux commutateurs (SU1-SU6; SV1-SV6; SW1-SW6).

3. Machine de construction selon la revendication 1 ou 2, **caractérisée en ce que** les enroulements de tension triphasée (U, V, W) sont connectés en forme d'étoile et leurs premiers sous-enroulements (U1, V1, W1) respectifs sont directement connectés au point neutre.

4. Machine de construction selon l'une quelconque des revendications précédentes, **caractérisée en ce que** les enroulements de tension triphasée (U, V, W) avec leurs sous-enroulements (U1, U2, U3; V1, V2, V3; W1, W2, W3) et la connexion de ceux-ci aux commutateurs (SU1-SU6; SV1-SV6; SW1-SW6) sont configurés identiquement au niveau des phases individuelles.

5. Machine de construction selon l'une quelconque des revendications précédentes, **caractérisée en ce que** les commutateurs (SU1-SU6; SV1-SV6; SW1-SW6) sont réalisés comme relais semi-conducteurs ou commutateurs/contacteur mécaniques.

6. Machine de construction selon l'une quelconque des revendications précédentes, **caractérisée en ce que** les enroulements de tension triphasée (U, V, W) sont formés chacun par trois sous-enroulements (U1, U2, U3; V1, V2, V3; W1, W2, W3) connectés en série, des commutateurs (SU1-SU6; SV1-SV6; SW1-SW6) étant disposés entre les sous-enroulements (U1, U2, U3; V1, V2, V3; W1, W2, W3) et entre leur côté de sortie et les conducteurs de phase (L1, L2, L3) du générateur à aimant permanent (12).
